# EUROPEAN PATENT APPLICATION

(11) **EP 1 336 510 A1**
(43) Date of publication of application: **20.08.2003**
(21) Application number: 03002584.5
(22) Date of filing: 07.02.2003
(51) Int. Cl.: B60C 11/11, B60C 11/12

(54) **Tread pattern with circumferentially extending central block arrays and method for designing such tread pattern**

(30) Priority: 14.02.2002 US 75216
(71) Applicant: THE GOODYEAR TIRE & RUBBER COMPANY, Akron, Ohio 44316-0001 (US)
(72) Inventor: Kolowski, Michael Alois, Mogadore, Ohio 44260 (US); Brown, Stephanie Carol, Akron, Ohio 44319 (US); Reid, Kevin Reid, Asheville, North Carolina 28801 (US)
(74) Representative: Leitz, Paul

(57) **Abstract**

A tread (20) has an equatorial centerplane and a plurality of tread elements (40, 42, 44) oriented into a first shoulder row (22), a second shoulder row (24) and a central array (30). The central array (30) forms a repeating pattern of tread elements (40) wherein each array (30) has at least five tread elements (40) distinct in size, shape or orientation relative to adjacent tread elements (40) within the array. The array (30) extends circumferentially adjacent the first or second shoulder row (22, 24) and has a centerline L inclined less than 45° relative to the equatorial centerplane. Each array (30) forms a large distinctive mosaic pattern repeating around the tread circumference, the array (30) having at least two rows of tread elements (40) oriented with at least one tread element (40) being on each side of the centerline (L) at the equatorial centerplane (CP) of the tread (20).

## Description

### TECHNICAL FIELD

This invention relates to improved treads for tires, more particularly to a different way to design tread patterns resulting in a wider range of feasible tread patterns.

### BACKGROUND OF THE INVENTION

The ground contacting or road-contacting portion of a tire is commonly referred to as the tread.

The treads generally have ribs or tread elements called blocks that are defined by surrounding or adjacent voids called grooves.

These ribs or blocks have an outer surface that forms the contacting area of the tread while the grooves form a void area. The contact surface area of the tread divided by the sum of the contact area and the void area defines the treads net-to-gross ratio. Snow tires and off-road tires generally have a net-to-gross ratio in the range of 35% to 55%, while all season passenger and light truck tires have slightly higher net-to-gross ratios of 55% to 80% generally.

Often these tread patterns are pitched to reduce noise and vibration generated by the tire's tread elements entering and leaving the contact patch formed between the tread and the road surface. Tread elements of similar size when arranged in circumferential rows around the tread will cause an excitation frequency to occur as the tread element impacts the road. At various speeds these harmonic frequency can achieve a tonal resonance that is quite loud and objectionable to the vehicle occupants as well as by-standers. Over the years, it has been found that varying the size, shape, and orientation of tread elements can reduce or increase the harmonic frequencies.

Pitching tread patterns is a very sophisticated science in its own right which can involve providing generally three or more distinct pitch lengths or sizes and then placing these pitch lengths in a generally non-uniform pitch sequence which when properly designed will result in a reduction of tread generated tire noise. Normally but not always, these pitches are laid out laterally extending across the tread pattern. This has historically meant that tread elements were laid out between 90° and 45° relative to the equatorial centerplane of the tire, usually between 90° and 60°. The closer to 90° the easier the pattern could be pitched. The fewer the types of tread elements employed the simpler the task. Thus the tread patterns routinely employed a limited variety of tread elements. Often one style was employed and that element would be arranged in circumferentially offset rows.

Pitching sequences were often as large as 64 pitches or more, in terms of size, and were placed around the tread circumference.

These design constraints have limited the type of tread patterns used on tires for years.

In addition to noise issues, the tread design should provide uniform wear and extended mileage. To achieve these goals the tread patterns tended to optimize the tread element shape into typically similar shaped polygons inclined slightly relative to the axial direction.

In most tires, the tread elements were laid out in a symmetrical pattern. The treads, whether formed in a segmental mold or a split halved mold, were effectively designed such that the entire tread pattern on one half of the mold could be turned 180° about the equatorial plane of the tire to form the opposite tread half. These symmetrical tread patterns are commonly referred to as turnaround designs. In such designs the leading edge of the tread elements on the left half of the pattern are the trailing edges of the tread elements on the right half of the pattern and vise versa. The turnaround designs mean the molds tread face can be molded on one half to make both tread halves. Another benefit of the tire is that it is non-directional and can be mounted on either side of the vehicle.

One alternative to a turnaround tread pattern is the asymmetric non-directional tread pattern. In this type of tire the axially outer tread shoulder is different from the axially inner tread shoulder. Such a tread pattern can be found in the Goodyear Wrangler GSA® as described in US-A- 5,415,215. These tires provided more net-contact area in the outer shoulder and much less on the inner shoulder, thus enhancing wear characteristics on the outer shoulder and traction characteristics on the inner shoulder. The tread being non-directional means the tires could be placed on either side of the vehicle by simply turning the tire around 180° from left side to right side. This insured the outer shoulder was always the higher net-to-gross portion of the tread.

A slightly more costly way to design a tread is the directional tread pattern. These tires have a preferred direction of rotation built into the design pattern. The reason a tire designer may opt for such a tread pattern is to enhance high-speed performance or wet traction. These types of tread were used on the Goodyear Aquatred® and the Goodyear Eagle GSC® tires described in US-A- 5,176,766 and 5,360,043, respectively. The Aquatred® was a symmetric directional tread pattern wherein each tread half was an exact mirror image of the opposite tread half. The Eagle GSC was an asymmetric tread pattern wherein each tread half was unique. In each of these designs a common feature is that the lateral grooves extend from the shoulders to a common intersection forming a V shaped repeating pattern circumferentially around the tread.

These directional treads have a preferred orientation of the tread elements thus the tires must not be turned 180° when mounted on the left side versus the right side. Thus, tires of this type are generally rotated front to back on vehicles to retard tread wear but not in the more typical left front to right rear and right front to left rear tire rotation crossing pattern.

The present invention can be used in the conventional non-directional style, the asymmetric style and non-directional style, a symmetric directional style or an asymmetric directional style.

The present invention provides a far greater selection of tread elements shapes and sizes while having the objectives of maintaining low noise and uniform wear.

The geometric shape of the tread elements create a much greater degree of design freedom for the tire designer yielding much more visually striking tread patterns that heretofore were not considered feasible and generally violates several common practices used in designing treads and has resulted in a rethinking of the tread designer computer software limitations.

### SUMMARY OF THE INVENTION

A tread 20 has an equatorial centerplane CP and a plurality of tread elements 40, 42, 44. The tread elements 42 are oriented into a first shoulder row 22, the tread elements 44 are oriented in a second shoulder row 24 and a central array 30 is formed by the tread elements 40.

Each central array 30 forms a repeating pattern of tread elements 40 wherein each array 30 has at least five tread elements 40 distinct in size, shape or orientation relative to adjacent tread elements 40 within the array 30. The array 30 is circumferentially adjacent the first shoulder row 22 or the second shoulder row 24 and extends across the equatorial centerplane CP extending to the opposite shoulder row. Each array 30 has a centerline L crossing and inclined less than 45° relative to the equatorial centerplane CP of the tread 20, generally less than 30°. Each array 30 generally has ten or more tread elements, more typically fifteen or more.

Each array 30 is spaced from an adjacent array 30 by a first boundary groove 60 and second boundary groove 62 extending from the first shoulder row 22 of tread elements 42 or the second shoulder row 24 of tread elements 44 respectively, the first boundary groove 60 and the second boundary groove 62 intersect at circumferential ends or extremes 31, 32 of the array. Each boundary groove 60, 62 outlines the array 30 and can be a curved, straight or combination of such groove portions thus having circumferential, inclined or laterally extending portions of grooves of the same or even different widths.

The tire 10 made according to the invention may be pitched including three or more distinct pitch sizes or lengths. The pitches are arranged in a noise reducing sequence and each array extends circumferentially across at least one or more pitches.

The resultant tread pattern has each central array 30 forming a large distinctive repeating mosaic shape formed by many smaller tread elements 40 of different sizes, shapes and orientations. The tread pattern may be symmetrical having the circumferentially adjacent arrays 30 turned oppositely but inclined similarly thus forming a non-directional turnaround type tread design. The tread pattern may be asymmetric wherein the circumferentially adjacent central arrays 30 are the same and are similarly inclined as is the case in a non-directional pattern.

In each array 30 at least two tread elements 40 are oriented with at least one tread element 40 being on each side of the centerline L at the equatorial centerplane CP of the tread 20. Ideally, each centerlines L of the circumferentially adjacent arrays 30 overlap by at least 25% of the overall length of the array 30. In many cases the adjacent arrays overlap circumferentially about 50%. This adds to the visual enhancement of the resultant mosaic tread pattern.

The use of the invention can also be applied to directional type tread pattern of symmetric or asymmetric designs wherein circumferentially adjacent arrays 30 are oppositely inclined equal or not equal in inclination.

### DEFINITIONS

For ease of understanding this disclosure the following terms are disclosed:
"Aspect ratio" of the tire means the ratio of its section height (SH) to its section width (SW) multiplied by 100% for expression as a percentage.
"Asymmetric tread" means a tread that has a tread pattern not symmetrical about the center plane or equatorial plane EP of the tire.
"Axial" and "axially" means lines or directions that are parallel to the axis of rotation of the tire.
"Circumferential" means lines or directions extending along the perimeter of the surface of the annular tread perpendicular to the axial direction.
"Equatorial Centerplane (CP)" means the plane perpendicular to the tire's axis of rotation and passing through the center of the tread.
"Footprint" means the contact patch or area of contact of the tire tread with a flat surface at zero speed and under normal load and pressure.
"Groove" means an elongated void area in a tread that may extend circumferentially or laterally about the tread in a straight, curved, or zigzag manner. Circumferentially and laterally extending grooves sometimes have common portions. The "groove width" is equal to tread surface area occupied by a groove or groove portion, the width of which is in question, divided by the length of such groove or groove portion; thus, the groove width is its average width over its length. Grooves may be of varying depths in a tire. The depth of a groove may vary around the circumference of the tread, or the depth of one groove may be constant but vary from the depth of another groove in the tire. If such narrow or wide grooves are substantially reduced depth as compared to wide circumferential grooves which the interconnect, they are regarded as forming "tie bars" tending to maintain a rib-like character in tread region involved.
"Inboard side" means the side of the tire nearest the vehicle when the tire is mounted on a wheel and the wheel is mounted on the vehicle.
"Lateral" means an axial direction.
"Lateral edges" means a line tangent to the axially outermost tread contact patch or footprint as measured under normal load and tire inflation, the lines being parallel to the equatorial centerplane.
"Net contact area" means the total area of ground contacting tread elements between the lateral edges around the entire circumference of the tread divided by the gross area of the entire tread between the lateral edges.
"Non-directional tread" means a tread that has no preferred direction of forward travel and is not required to be positioned on a vehicle in a specific wheel position or positions to ensure that the tread pattern is aligned with the preferred direction of travel. Conversely, a directional tread pattern has a preferred direction of travel requiring specific wheel positioning.
"Outboard side" means the side of the tire farthest away from the vehicle when the tire is mounted on a wheel and the wheel is mounted on the vehicle.
"Radial" and "radially" means directions radially toward or away from the axis of rotation of the tire.
"Rib" means a circumferentially extending strip of rubber on the tread which is defined by at least one circumferential groove and either a second such groove or a lateral edge, the strip being laterally undivided by full-depth grooves.
"Sipe" means small slots molded into the tread elements of the tire that subdivide the tread surface and improve traction, sipes are generally narrow in width and close in the tires footprint as opposed to grooves that remain open in the tire's footprint.
"Tread element" or "traction element" means a rib or a block element defined by having a shape adjacent grooves.
"Tread Arc Width" means the arc length of the tread as measured between the lateral edges of the tread.

### BRIEF DESCRIPTION OF THE DRAWINGS

Figures 1 through 4 illustrates a first embodiment of the invention:
Figure 1 is a plan view of an array of tread elements arranged in a tread pattern, according to the first embodiment of the invention, the array being displayed in solid lines and being highlighted by shading, the first and second shoulder rows having the tread elements shown in broken lines;
Figure 2 is a perspective view of a tire tread showing the array in a tire tread, it being understood that the pattern repeats uniformly throughout the circumference of the tread;
Figure 3 is a front elevational view thereof;
Figure 4 is an enlarged fragmentary plan view.
Figures 5 through 8 illustrate a second embodiment of the invention:

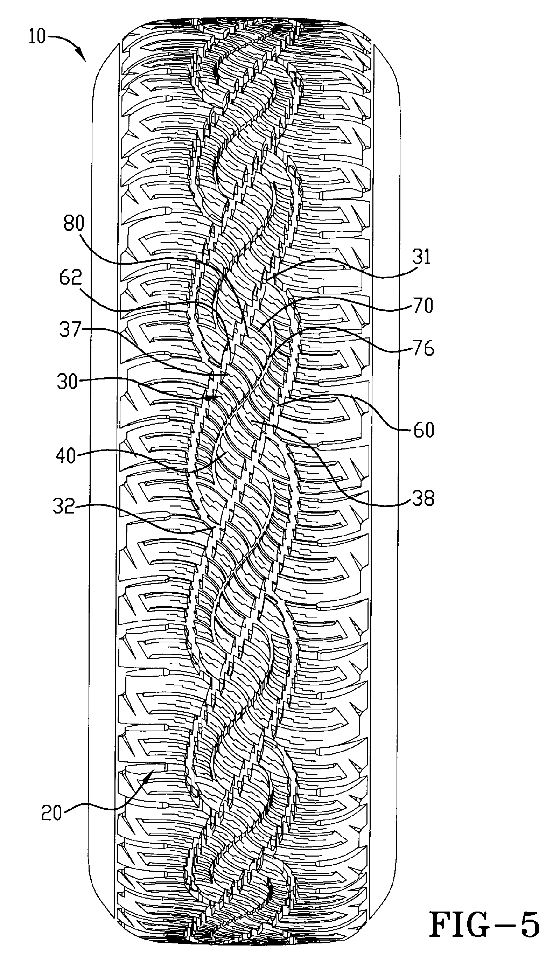

Figure 5 is a plan view of an array of tread elements arranged in a tread pattern the array being displayed in solid lines and being highlighted by shading;

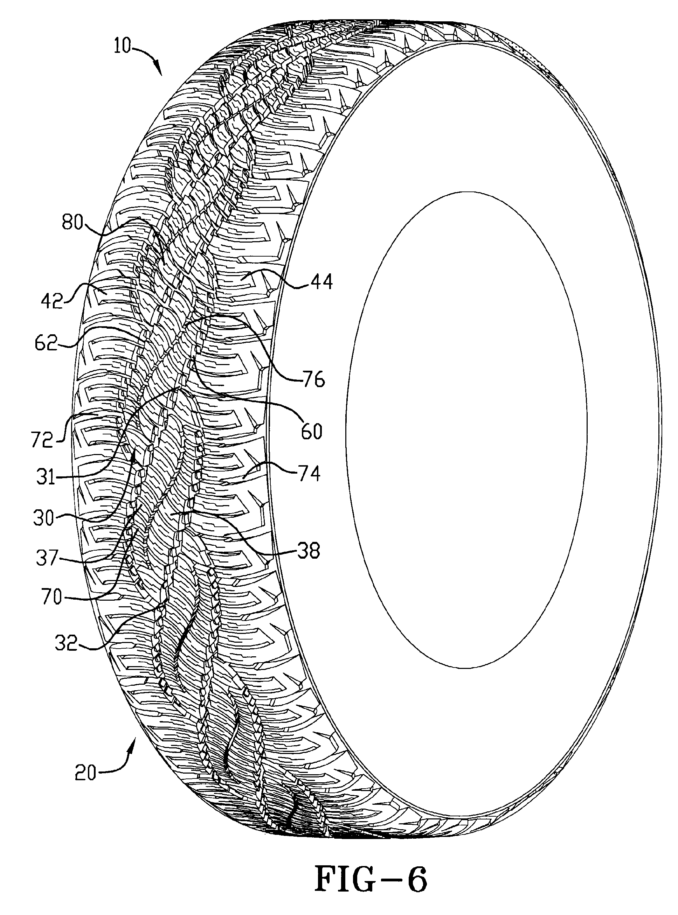

Figure 6 is a perspective view of a tire tread showing the array in a tire tread, it being understood that the pattern repeats uniformly throughout the circumference of the tread;

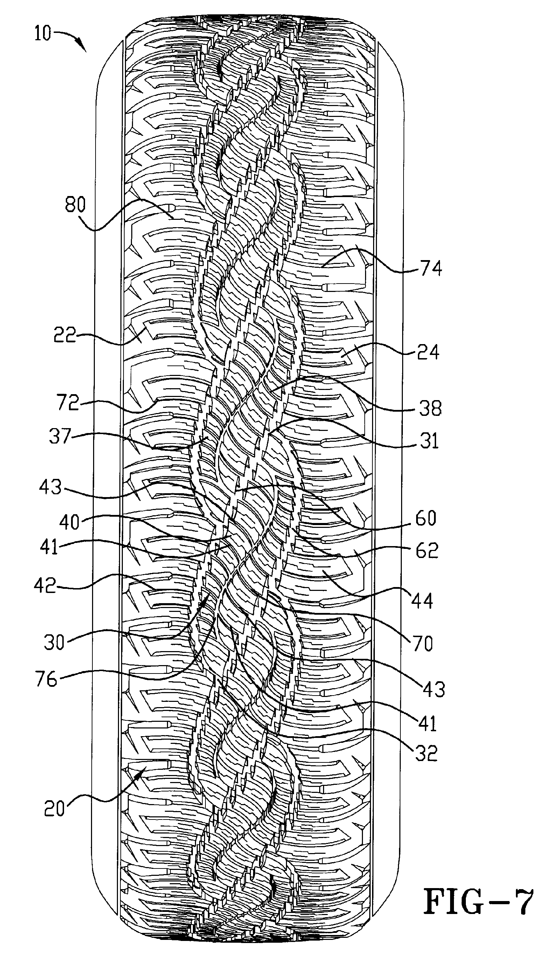

Figure 7 is a front elevational view thereof;

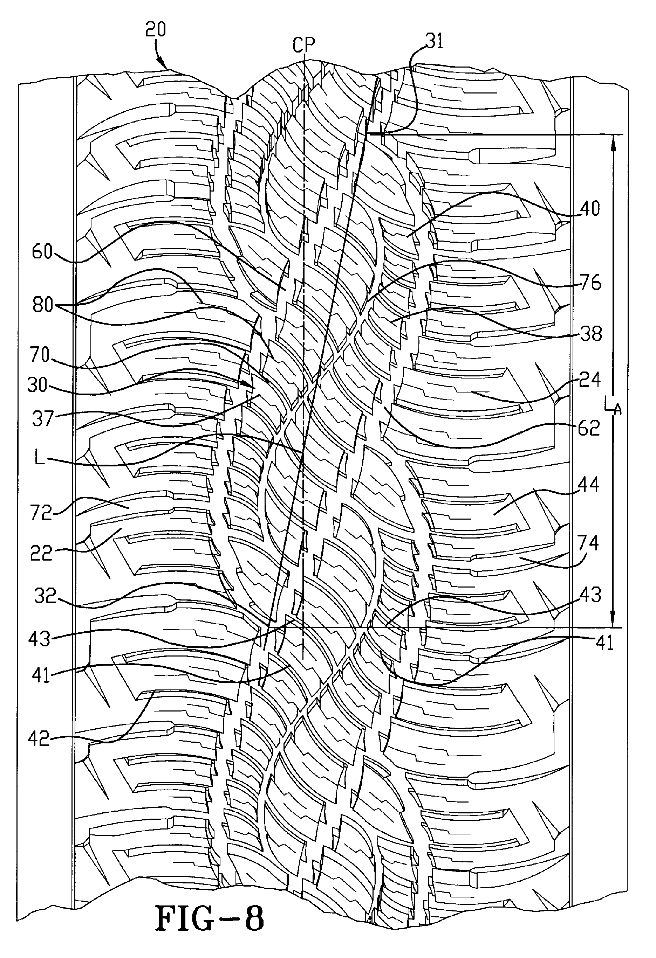

Figure 8 is an enlarged fragmentary plan view.

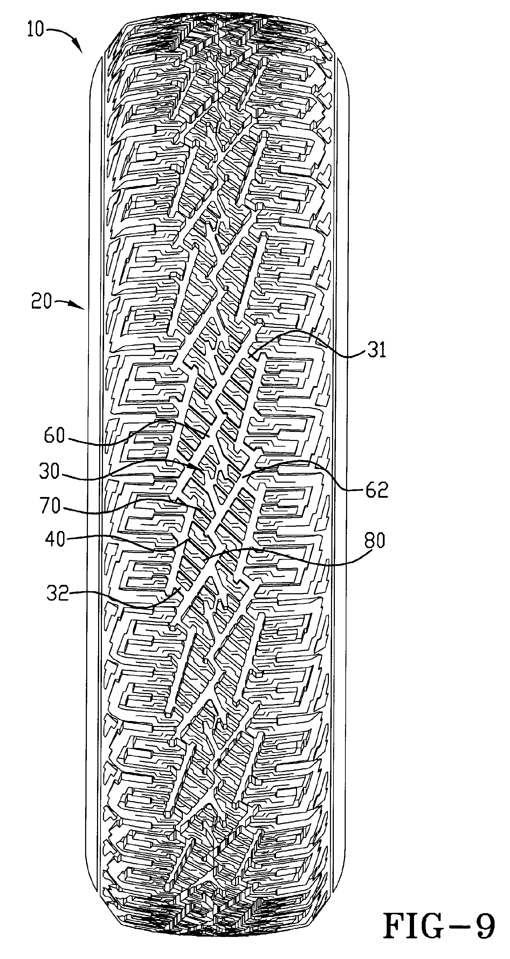

Figures 9 through 12 illustrate a third embodiment of the invention:
Figure 9 is a plan view of an array of tread elements arranged in a tread pattern, the array being displayed in solid lines and being highlighted by shading;

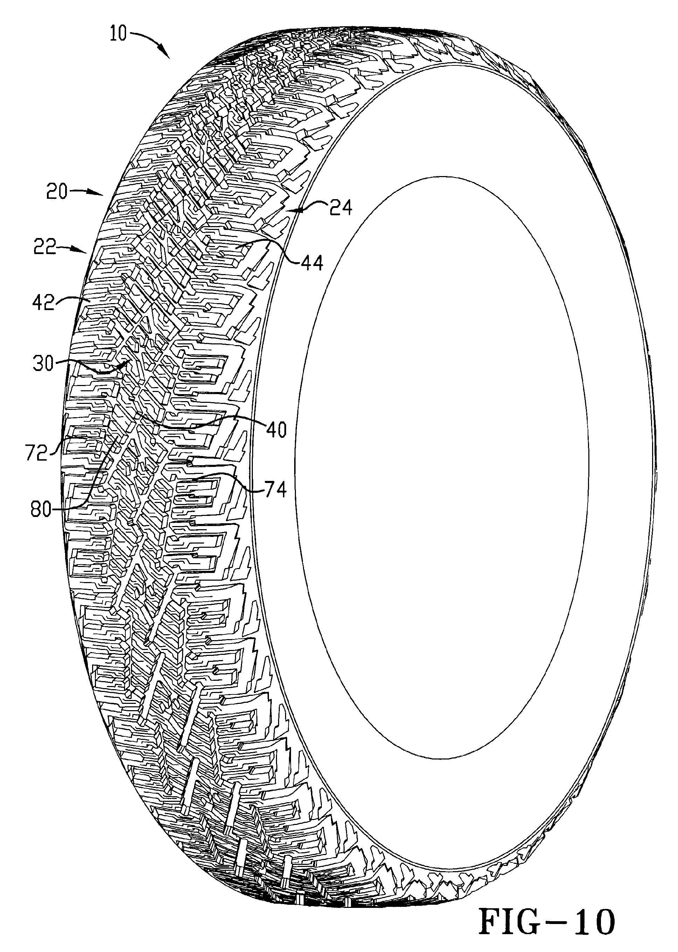

Figure 10 is a perspective view of a tire tread showing the array design in a tire tread, it being understood that the pattern repeats uniformly throughout the circumference of the tread;

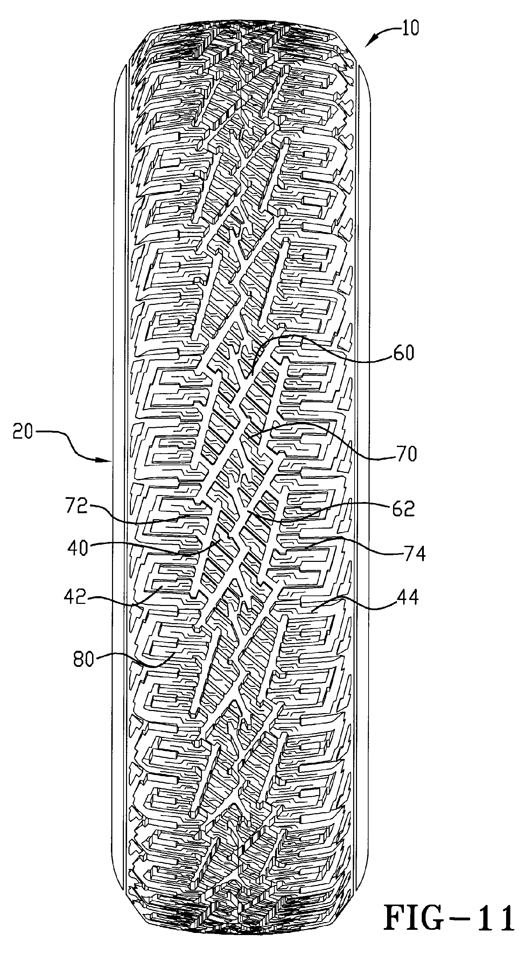

Figure 11 is a front elevational view thereof;

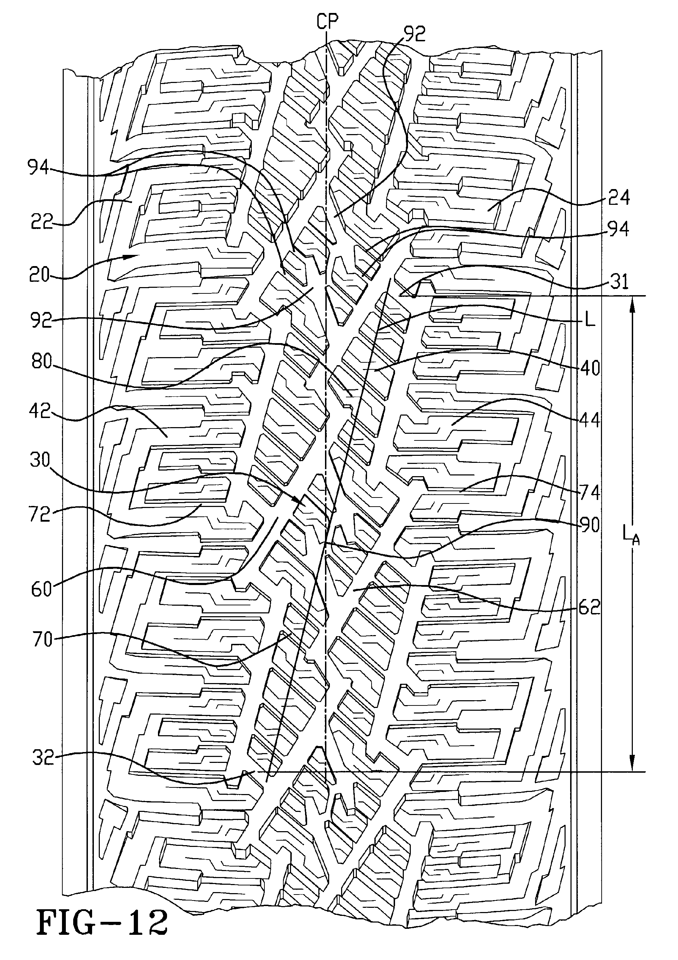

Figure 12 is an enlarged fragmentary plan view.

### DETAILED DESCRIPTION OF THE INVENTION

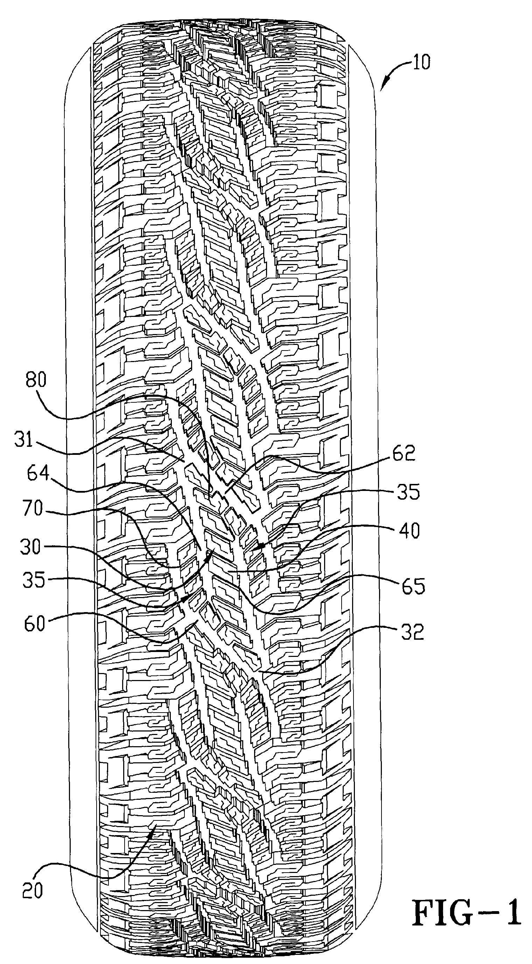

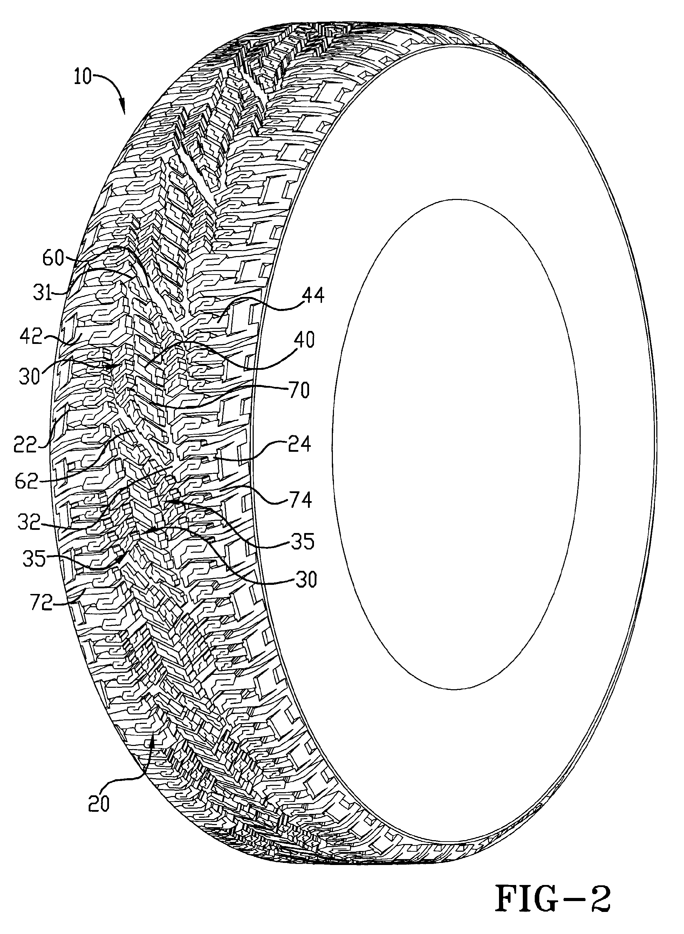

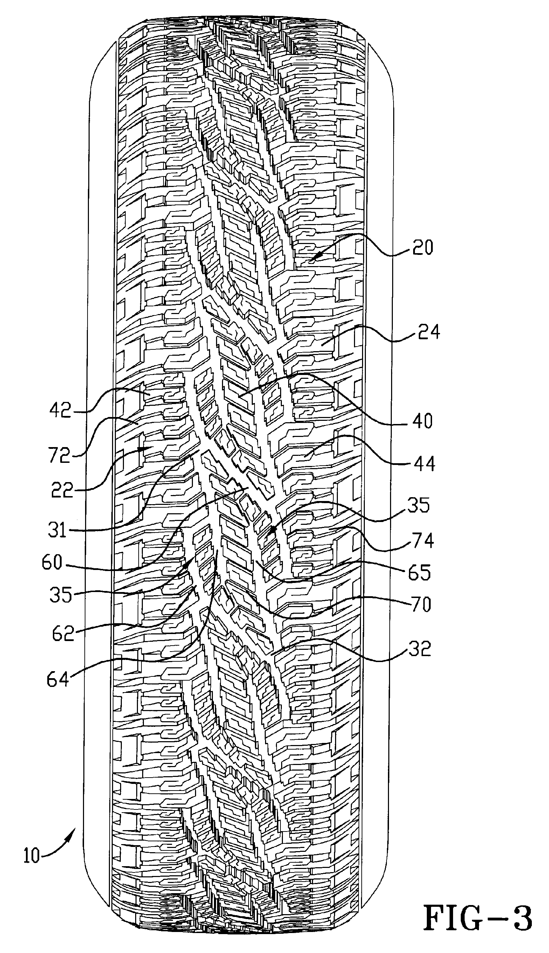

With reference to Figures 1 through 12, various embodiments of the invention are illustrated. As in figures 1,5 and 9 each embodiment employs a tread 20 having a central array 30 of tread elements 40 which are grouped in a mosaic type arrangement to give the appearance of a large tread feature comprised of many smaller tread elements of distinct size, shapes or orientation. Each array 30 is surrounded or outlined by a first boundary groove 60 and a second boundary groove 62. The first and second boundary grooves 60, 62 intersect at circumferential extremes 31, 32 of the arrays 30. Each tread element 40,42 and 44 may have one or more sipes 80.

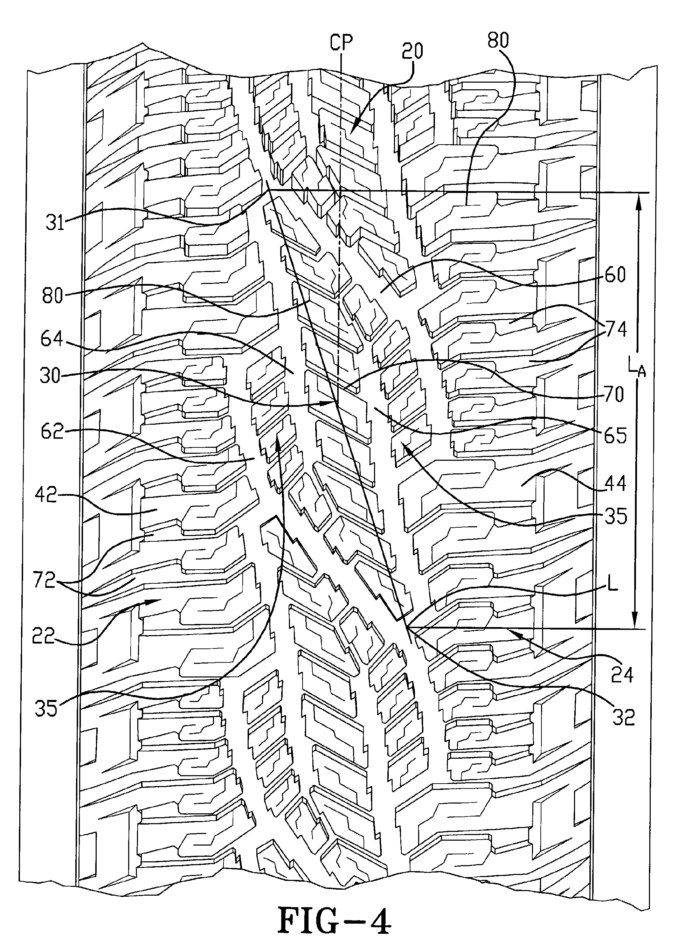

Each array 30 has a centerline L, the centerline L passes through circumferential extremes 31, 32 of the central arrays 30 as shown in Figures 4,8 and12.

The central arrays 30 can be arranged in large patterns that extend from a first shoulder row 22 of tread elements 42 toward a second shoulder row 24 of tread elements 44 as illustrated in Figures 4, 8 and 12

In each embodiment the central arrays are elongated circumferentially having the centerline L of the array 30 extending at an angle of less than 45° relative to the equatorial centerplane CP, typically the angle is between 10° to 30° relative to the circumferential direction.

This creates a very elongated central pattern formed by the mosaic pattern of distinctly shaped tread elements 40.

Each shoulder portions of the tread 20 has a row 22, 24 of shoulder tread elements 42, 44 in the form of distinct blocks or a continuous rib. A first row 22 of shoulder tread elements 42 is on one lateral extreme of the tread 20 and a second row 24 of shoulder tread elements 44 is located on the opposite lateral extreme of the tread 20. The axially inner portions of the shoulder row of tread elements 42, 44 outline a portion of an adjacent central array 30, the shoulder row 22, 24 of tread elements 42, 44 and the adjacent portion of the central array 30 being spaced by a portion of the first or the second boundary groove 60, 62. By outlining the central arrays shape the axial extent of the shoulder tread elements 42, 44 are axially offset sufficiently to create a boundary groove width W that is either constant or progressively increasing or decreasing over the groove length portions adjacent the array elements and the shoulder elements. As illustrated in Figures 4,8 and 12 in each of the embodiments, each boundary groove 60, 62 is typically at least two times wider than the laterally inclined grooves 70 of the array. This feature enables the boundary grooves 60, 62 to be more pronounced creating a clear image between the shoulder tread elements 42, 44 in the central array 30. In each embodiment the central array 30 employs boundary grooves 60, 62 that have a groove width of 3% to 10% of the tread arc width. This groove width is typically the average groove width measured over a majority of the groove 60, 62 length. It is understood that narrow portions of the boundary groove can occur at the shoulder rows but the boundary grooves overall purpose is to highlight the large mosaic tread pattern formed by the central array 30.

The laterally extending shoulder grooves 72, 74 as illustrated in Figures 4,8 and 12, have a width in the portion near the intersection of a boundary groove 60, 62 that is less than 66% of the width of the boundary grooves 60, 62, typically less than 50% of the width of the boundary grooves 60, 62. This relationship further enables the central arrays 30 to stand out from the shoulder portions 22, 24.

In each of these embodiments the centerline L is generally highly circumferentially inclined at an angle of less than 45° relative to the circumferential equatorial centerplane CP, typically less than 30°.

In several of the tread patterns, the width W of the boundary groove 60, 62 is basically constant around the entire periphery or outline of the array 30 as in the first and third embodiments shown in Figures 1 through 4 and Figures 9 through 12. Alternatively in Figure 5 through 8 the circumferential extremes 31, 32 can have a slight narrowing of the first and second boundary grooves 60, 62. The width of the boundary grooves 60, 62 need not be a constant but they do need to clearly outline the central array 30. In these first, second, and third embodiments the central array 30 extends from a first tread shoulder row 22 all the way across to a second shoulder row 24. These designs are visually striking forming a very large mosaic tread feature having a centerline L inclined generally circumferentially from the circumferential extremes 31, 32 of the array. The first embodiment has the centerline L inclined from lower right to upper left at an angle θ, of less than 45° relative to the equatorial centerplane CP as shown about 18°.

In each array 30 at least two rows of tread elements 40 are oriented with at least one tread element 40 being on each side of the centerline L at the equatorial centerplane of the tread 20. Ideally each centerlines L of the circumferentially adjacent arrays 30 overlap by at least 25% of the overall length of the array 30 as measured between the circumferential extremes 31, 32 of the array 30. In many cases the adjacent arrays 30 overlap circumferentially about 50%. This makes the repeating pattern of arrays 30 visually apparent as a large tread pattern or mosaic formed by many smaller distinctly sized tread elements 40.

With reference to the first embodiment shown in Figures 1 through 4, the first row 22 and second row 24 of shoulder tread elements 42, 44 has a net-to-gross ratio of 66.7% when that portion of the boundary grooves 60, 62 adjacent the shoulder rows 22, 24 is bisected yielding half of the groove portion in the shoulder and half in the central area. In such a case the central array 30 has a net-to-gross ratio of 50%. The combination of the shoulder rows 22, 24 with the central array 30 creates a total net-to-gross ratio of 58%. This embodiment has a higher contact area in the shoulders 22, 24 when combined as compared to the central array 30. The two shoulder areas when combined occupy about the same total area as the central area. It is understood that the net-to-gross ratio can vary slightly but when taken across at least one full array 30 in circumferential length as in Figure 4, the deviation around the tread 20 is minimal and the value can be assumed to be the values one would get if the entire tread circumference were measured. As a guide to measuring the net-to-gross ratios over at least one full array length it is understood that portions of the adjacent arrays 30 that circumferentially overlap the array 30 are in fact included in the net-to-gross ratio of the central area. What is greater significance is the boundary grooves adjacent the shoulder rows is bisected forming a boundary line that is not a straight line. The effect is quite different than the conventional practice of dividing the tread into zones that have boundaries parallel to the equatorial centerplane of the tire.

With reference to the tread 20 of the first embodiment tire 10 of figures 1 through 4 the central array 30 of tread elements 40 extends from adjacent the first row 22 of tread elements 42 to adjacent the second row 24 of tread elements 44. The central array 30 is bounded by a first boundary groove 60 and a second boundary groove 62, each boundary groove 60, 62 being of a width between 5.8% to 7.0% of the tread arc width while the lateral grooves 72, 74 in each shoulder row are about 2 mm in width which can vary as function of pitch sizes.

An important feature in the array 30 of the first embodiment is the use of wide portions of grooves 64, 65 as shown in Figure 4 extending on each side of the common central portion of the array. This feature creates two oppositely oriented branches 35 of tread elements 40, one branch 35 extending from each circumferential end 31, 32 or extremity of the array 30 toward a shoulder row 22, 24 on each half of the tread 20.

With reference to the tread 20 of the second embodiment tire 10 of Figures 5 through 8, the central array 30 of tread elements 40 extends from adjacent the first row 22 of tread elements 42 to adjacent the second row 24 of tread elements 44. The central array 30 is bounded by a first boundary groove 60 and a second boundary groove 62 each boundary groove 60, 62 being of a width at least 4.5 to 7.6% of the tread arc width, while the lateral grooves 72, 74 in each shoulder row are about 2 mm in width which can vary as a function of pitch size.

As shown in Figure 8 the central array 30 has a plurality of narrow grooves separating the tread elements 40 and one elongated S shaped narrow groove 76 bisecting the central array 30 of tread elements 40 into a first portion 37 and second portion 38 of equal but oppositely oriented tread elements 40. The central array 30 form a pattern that repeats itself in such a fashion that the combination of circumferentially adjacent arrays 30 looks like a braided rope wrapped around the tread 20. This striking appearance is enhanced by the large width boundary grooves 60, 62 and the silhouette formed by the axially inner portions of the tread elements 42, 44 of the shoulder rows 22, 24, respectively.

In this configuration, the tread elements 40 of the central array 30 have leading edges 41 and trailing edges 43 that are curved, one half of the array 30 having curved edges oppositely oriented relative to the adjacent half of the array 30. Each half of the array 30, as illustrated, has eleven distinctly sized and shaped tread elements 40. The use of twenty-two discrete tread elements 40 forms the array 30 into a formable design feature. Those of ordinary skill in the art of tire building know that the use of large solid blocks, the same size as the central array would not be feasible due to vibration and irregular tread wear problems known to occur in such large sized tread features. The present invention provides the appearance of a large tread feature by forming it out of a mosaic of smaller tread elements 40. This enables the tire designer to maintain good tread wear and noise considerations. Both lateral and circumferential stiffness of the tread elements 40, 42, 44 can be designed into the tread 20.

As shown in Figure 8 the centerline L of the central array 30 extends through the lateral extremes 31, 32. The centerline L is inclined relative to the equatorial centerplane CP at an angle θ of less than 45° as illustrated about 10°. This highly circumferential extending inclination is unusual in tire tread designs which generally have the tread elements oriented laterally between 45° and 90° relative to the direction of travel. Unlike tires having the tread elements oriented in circumferential rows the present invention has the tread elements oriented along inclined centerlines L.

This second embodiment has each tread shoulder row 22, 24 of tread elements 42, 44 having a net-to-gross ratio of 60%. The central area has a net-to-gross ratio of 57%. The net-to-gross ratios of each tread region is determined by bisecting that portion of the boundary groove 60, 62 that is located adjacent the first or second shoulder row 22, 24 and the central array 30. This methodology of forming the tread shoulder rows 22, 24 total boundary area and the central array 30 boundary area is unique in that the boundaries are not the normal straight circumferential lines that are parallel to the equatorial centerplane CP as previously noted. Typically treads are divided by zones of a width equal to a percentage of the total tread width. In the present invention the tread zones of the tread are non-linear do to the shape of the boundary grooves 60, 62. Accordingly, the boundary of the tread zones constantly changes in lateral location within a defined range, typically between a minimum and a maximum range dictated by the boundary groove centerline.

With reference to Figures 9-12 a third embodiment of the invention is illustrated. As in the first and second embodiments, this tread pattern is a non-directional turnaround design.

As shown in Figure 12 the central array 30 has eighteen tread elements 40 extending from a first shoulder row 22 of tread elements 42 across the equatorial centerplane to a second shoulder row 24 of tread elements 44. Each array 30 has a centerline L extending from the circumferential extremities 31, 32 of the array 30. The centerline L is inclined at an angle θ of 13° relative to the equatorial centerplane CP.

The boundary grooves 60, 62 in this third embodiment are comprised of straight-line segments. Narrower grooves 70 separating the tread elements 40 within each central array 30 intersect the boundary grooves 60, 62 substantially perpendicularly as illustrated in Figure 12. At the equatorial centerplane CP lays the centroid 90 of the array. The centroid 90 is the center of the surface areas and is a point about which the array 30 when pivoted 180° keeps the exact geometric shape. On each side of the centroid 90 lies one wide groove 92 extending from a first or second boundary groove 60, 62 which splits into two narrow grooves 94 spaced by a tread element 40 and intersecting the opposite facing tread element 40.

Using the non-linear net-to-gross calculations used in the previous discussion yields a shoulder area net-to-gross ratio of 62%. The central array 30 area between the shoulder areas has a net-to-gross ratio of 52%. The overall net-to-gross ratio of the tread is 57% in this example. As shown in Figure 9 each tread element 40 has one or more sipes 80.

In order to design a tread according to the present invention the following method is recommended:

The tire designer develops a large elongated pattern for the central area of the tread. As shown in Figures 4,8 and 12 the length LA of the large elongated pattern is established about equal to the length of the contact patch or longer, the elongated pattern has a centerline inclined relative to the treads centerplane at an angle of 30° or less.

The tire designer replicates the large elongated pattern forming a circumferential row of large elongated patterns, each pattern being space by a boundary groove.

The tire designer creates the shoulder area boundary silhouetting the large elongated patterns and extending to adjacent portions of the boundary grooves.

The central area is divided into five or more distinctly sized or shaped individual blocks of tread elements having a block length preferably two times the block width. The shoulder area is divided into individual blocks of tread elements outlining the elongated tread pattern.

The resultant method provides tread patterns as illustrated in the drawings of Figures 1 through 12.

## Claims

1. A tread (20) has an equatorial centerplane (CP) and a plurality of tread elements (40, 42, 44) the tread element being oriented into a first shoulder row (22), a second shoulder row (24) and a central array (30) of tread elements (40), the tread **characterized in that**:
each central array forms a repeating pattern of tread elements wherein each array (30) has at least five tread elements (40) distinct in size, shape or orientation relative to adjacent tread elements (40), the array (30) extends from a first end adjacent the first shoulder row (22) or the second shoulder row (24) crossing the equatorial centerplane (CP) to a second end adjacent the opposite shoulder row, each array (30) has a centerline (L) inclined less than 45° relative to the equatorial center plane (CP) of the tread (20), the centerline L passes through the first and second ends at circumferential extremes (31, 32) of the array.

2. The tread of Claim 1 wherein each array (30) has at least 10 tread elements (40) forming the repeating pattern.

3. The tread of Claim 2 wherein each array (30) has fifteen or more tread elements (40) forming the repeating pattern.

4. The tread of Claim 1 wherein each array (30) is spaced from an adjacent array by a first boundary groove (60) and a second boundary groove (62) extending from the first shoulder row (22) of tread elements (42) and the second row (24) of tread elements (44) respectively, the first boundary groove and second boundary groove intersecting at circumferential extremes (31, 32) of the array.

5. The tread of Claim 4 wherein the tread (20) is pitched including three or more distinct pitch lengths arranged in a noise reducing sequence and each array (30) extends circumferentially across at least one or more pitches.

6. The tread of Claim 1 wherein each array (30) forms a large distinctive repeating mosaic shape formed by many smaller tread elements (40) of different sizes, shapes or orientation.

7. The tread of Claim 1 wherein the centerline (L) of the array (30) is inclined circumferentially less than 30° relative to the equatorial centerplane (CP).

8. The tread of Claim 1 wherein the tread pattern is symmetrical with circumferentially adjacent arrays (30) turned oppositely but inclined similarly.

9. The tread of Claim 1 wherein the tread pattern is asymmetric wherein the circumferentially adjacent central arrays (30) are the same and oriented equally.

10. The method of designing a tread pattern for a tire (10) having a contact patch having a length comprises the steps of forming large elongated pattern for the central area of a tread (20) having a length, the length (L_{A}) of the large elongated pattern being established about equal to the length of the contact patch of the tire;
orienting a centerline (L) of the large elongated pattern at an angle of 30° or less relative to the equatorial centerplane (CP);
replicating the large elongated pattern forming a circumferential row of large elongated patterns spaced by boundary grooves (60, 62);
outlining the large elongated patterns of the central area forming shoulder areas;
dividing the central area large elongated patterns into many individual blocks of tread elements (40); and
dividing each shoulder area into individual blocks of tread elements outlining the elongated tread pattern.
